# EUROPÄISCHE PATENTSCHRIFT

(11) **EP 3 691 925 B1**
(45) Veröffentlichungstag und Bekanntmachung des Hinweises auf die Patenterteilung: **02.02.2022**
(21) Anmeldenummer: 18779305.4
(22) Anmeldetag: 20.09.2018
(51) Int. Cl.: B60K 37/06, B60K 35/00, H04N 13/395

(54) **BEDIENSYSTEM MIT DREIDIMENSIONALER ANZEIGE FÜR EIN FAHRZEUG**
OPERATING SYSTEM WITH 3D DISPLAY FOR A VEHICLE
SYSTÈME DE COMMANDE UTILISATEUR COMPRENANT UN ÉCRAN TRIDIMENSIONNEL POUR UN VÉHICULE

(30) Priorität: 04.10.2017 DE 102017217591
(43) Veröffentlichungstag der Anmeldung: 12.08.2020
(73) Patentinhaber: Audi AG, 85045 Ingolstadt (DE)
(72) Erfinder: ROSICKY, Vit, 73911 Frydlant N.O. (CZ); HÉLOT, Jacques, 85051 Ingolstadt (DE)
(86) Internationale Anmeldenummer: PCT/EP2018/075499
(87) Internationale Veröffentlichungsnummer: WO 2019/068479

(56) Entgegenhaltungen:
- DE-A1-102014 222 751
- DE-A1-102015 011 403
- US-A1- 2014 282 182
- US-A1- 2015 009 189
- US-A1- 2015 363 070

## Beschreibung

Die vorliegende Erfindung betrifft ein Bediensystem für mehrere Geräte eines Fahrzeugs, welches eine Anzeigeeinrichtung mit mindestens zwei in einer Blickrichtung eines Bedieners hintereinander angeordneten und sich quer zu der Blickrichtung erstreckenden ebenen Anzeigebereichen aufweist.

Fahrzeuge für den Straßenverkehr weisen gewöhnlich eine Vielzahl unterschiedlicher Geräte, wie beispielsweise einen Motor, eine Beleuchtungsanlage, eine Klimaanlage, ein Navigationsgerät oder ein Radiogerät auf. Die Geräte können von einem Insassen des Fahrzeugs, insbesondere von einem Fahrer des Fahrzeugs, bedient werden, um die jeweiligen Betriebszustände der Geräte wunschgemäß zu verändern.

Jeder Betriebszustand eines Geräts ist durch bestimmte veränderliche Steuergrößen definiert. Zu diesen Steuergrößen gehören beispielsweise eine aktuelle Beschleunigung des Motors, ein Modus der Beleuchtungsanlage, wie beispielsweise Standlicht oder Fernlicht, eine Zieltemperatur der Klimaanlage, eine Verkehrsnetzkarte eines Navigationsgeräts mit einer Fahrtroute zu einem Fahrtziel oder auch eine Lautstärke und eine Senderabstimmung des Radiogeräts. Neben diesen Steuergrößen können weitere Größen, wie beispielsweise eine gemessene Außentemperatur in einer Umgebung des Fahrzeugs von Interesse sein.

Zum bestimmungsgemäßen Verwenden eines Fahrzeugs wird entsprechend eine Vielzahl von unterschiedlichen Informationen benötigt. Diese Informationen müssen in einem Blickfeld des Fahrers, des Beifahrers und/oder eines sonstigen Mitfahrers zur Anzeige gebracht werden.

In älteren Fahrzeugen weist zumeist jedes installierte Gerät seine eigene Anzeigeeinrichtung auf. Entsprechend muss insbesondere der Fahrer eines solchen Fahrzeugs seinen Blick in viele unterschiedliche Richtungen wenden, um jede benötigte Information zu erfassen, wodurch er von einem Verkehrsgeschehen in der Umgebung des Fahrzeugs abgelenkt sein kann.

In jüngeren Fahrzeugen werden Geräteinformationen dagegen zunehmend gebündelt und in einer gemeinsamen Anzeigeeinrichtung sichtbar gemacht. Infolgedessen muss ein Fahrer eines modernen Fahrzeugs seinen Blick lediglich in eine einzige Richtung wenden, um benötigte Informationen zu erfassen. Üblicherweise werden zu diesem Zweck Flüssigkristallanzeigen (Liquid Crystal Display, LCD) als gemeinsame Anzeigeeinrichtungen verbaut.

Allerdings geht die Entwicklung dahin, Fahrzeuge mit einer zunehmenden Anzahl von Geräten zu versehen. Zudem erhöht sich die Funktionsvielfalt und damit Komplexität jedes einzelnen in einem Fahrzeug verbauten Geräts, weshalb zum Darstellen unterschiedlicher Betriebszustände aller Geräte jeweils eine größere Anzahl von Informationen erforderlich ist. Zwar wird angestrebt, die Anzahl dargestellter Informationen zu reduzieren. Dennoch kann ein auf einer gemeinsamen Anzeigeeinrichtung verfügbarer Anzeigebereich nicht ausreichen, um sämtliche Informationen gleichzeitig und übersichtlich darzustellen.

Eine bekannte Möglichkeit, eine Vielzahl von Informationen auch auf relativ kleinen Anzeigebereichen darzustellen, beruht auf einer hierarchischen Organisation der Informationen. Zwar werden dabei auf der Anzeigefläche stets nur Informationen einer Hierarchieebene gleichzeitig dargestellt. Jedoch wird für den Betrachter eine Menüstruktur zur Verfügung gestellt, um zwischen den verschiedenen Hierarchieebenen zu navigieren.

Bei einer entsprechenden Breite und/oder Tiefe der hierarchischen Organisation kann das Verwenden einer solchen Anzeigeeinrichtung allerdings dennoch unübersichtlich sein, da benötigte Informationen zunächst unsichtbar sind und erst nach zielgerichtetem Navigieren mittels der Menüstruktur zur Anzeige gebracht werden. Das Erlernen einer verzweigten Menüstruktur kann für den Betrachter aber aufwändig sein. Überdies kann das Navigieren mittels der Menüstruktur den Betrachter ebenfalls von dem Verkehrsgeschehen ablenken, wodurch sich die Gefahr eines Unfalls erhöht.

Eine weitere Möglichkeit, eine Vielzahl von Informationen auf einer Anzeigeeinrichtung für einen Betrachter sichtbar zu machen, besteht darin, die Anzeigeeinrichtung mit mehreren Anzeigebereichen statt eines einzigen Anzeigebereichs auszubilden. Damit die mehreren Anzeigebereiche dennoch in derselben Blickrichtung des Betrachters angeordnet sind, können diese hintereinander vorgesehen sein. Um den Blick des Betrachters auf hintere Anzeigebereiche nicht zu versperren, müssen vordere Anzeigebereiche transparent ausgestaltet sein. Eine auf diese Weise gebildete Anzeigeeinrichtung ermöglicht eine Darstellung von Informationen in drei statt in zwei Raumdimensionen, wodurch ein größere Vielzahl von Informationen gleichzeitig angezeigt werden kann.

So offenbart die DE 10 2014 016 324 A1 eine Anzeigeeinrichtung für ein Fahrzeug, welches einen Bildschirm und zwei oder drei in einer Blickrichtung eines Betrachters hintereinander angeordnete Spiegel aufweist. Ein hinterer Spiegel ist undurchlässig und jeder weitere vordere Spiegel teiltransparent ausgebildet. Jeder Spiegel bildet einen eine virtuelle Bildebene definierenden Anzeigebereich, auf dem von dem Bildschirm dargestellte Objekte für den Betrachter sichtbar sind.

Alternativ dazu offenbart die DE 10 2015 011 403 A1 ein Verfahren zum Anzeigen von Daten mittels einer biegbaren Anzeigeeinrichtung. Die Anzeigeeinrichtung ist derart gebogen, dass mindestens zwei in einer Blickrichtung eines Betrachters hintereinander angeordnete Anzeigebereiche gebildet werden. Auf diese Weise können sich angezeigte Daten überlagern und einen Tiefeneffekt erzeugen.

Auch die US 2014/0333663 A1 offenbart eine Anzeigeeinrichtung für ein Fahrzeug. Die Anzeigeeinrichtung umfasst einen ersten Anzeigebereich sowie einen oder mehrere vor dem ersten Anzeigebereich angeordnete weitere transparente Anzeigebereiche, welche den ersten Anzeigebereich bezogen auf eine Blickrichtung eines Betrachters ganz oder teilweise überlappen.

Weitere Bediensysteme für Geräte eines Fahrzeugs, welche jeweils eine Anzeigeeinrichtung und eine zum Betätigen der Geräte ausgebildete Betätigungseinheit umfassen, sind in US 2014/0282182 A1, DE 2014 222 751 A1 und US 2015/0363070 A1 beschrieben.

Das bestimmungsgemäße Verwenden eines Fahrzeugs erfordert neben einem kontinuierlichen Erfassen von Informationen auch ein wiederholtes Bedienen der in dem Fahrzeug zumeist an unterschiedlichen Positionen verbauten Geräte. Naturgemäß werden die meisten Geräte eines Fahrzeugs von dem Fahrer des Fahrzeugs bedient. Folglich kann der Fahrer auch durch das Bedienen der Geräte von dem Verkehrsgeschehen in einer Umgebung des Fahrzeugs abgelenkt sein.

Der Erfindung liegt daher die Aufgabe zugrunde, ein integriertes Bediensystem für ein Fahrzeug zur Verfügung zu stellen, dessen Betätigung wenig Aufmerksamkeit erfordert und ein intuitives und ergonomisches Bedienen von in dem Fahrzeug verbauten Geräten ermöglicht.

Ein Gegenstand der vorliegenden Erfindung ist ein Bediensystem für mehrere Geräte eines Fahrzeugs, welches eine Anzeigeeinrichtung aufweist. Die Anzeigeeinrichtung umfasst mindestens zwei in einer Blickrichtung hintereinander angeordnete und sich quer zu der Blickrichtung erstreckende ebene Anzeigebereiche. Dadurch ist die verfügbare Anzeigefläche gegenüber einer Anzeigeeinrichtung mit einem einzigen Anzeigebereich vergrößert, ohne dem Betrachter eine Veränderung seiner Blickrichtung abzuverlangen. Bezogen auf die Blickrichtung wird jede Orientierung eines ebenen Anzeigebereichs als Quererstreckung verstanden, bei welcher sich die Blickrichtung nicht parallel zu dem ebenen Anzeigebereich erstreckt. Mit anderen Worten kann ein Winkel zwischen der Blickrichtung und dem ebenen Anzeigebereich ein rechter Winkel oder ein spitzer Winkel sein.

Erfindungsgemäß ist die Betätigungseinheit zum Navigieren zwischen den Anzeigebereichen und innerhalb jedes Anzeigebereichs sowie zum Bedienen der Geräte ausgebildet. Dadurch wird ein hoch integriertes Bediensystem für ein Fahrzeug geschaffen, dessen Betätigung durch den Bediener einheitlich erfolgen kann und somit schnell erlernbar ist. Dies trägt zu einer ergonomischen und sicheren Bedienung der Geräte des Fahrzeugs bei.

In einer Ausführungsform umfasst die Anzeigeeinrichtung mehrere organische Leuchtdioden (Organic Light Emitting Diode, OLED) und/oder Dünnschichttransistoren (Thin Film Transistor, TFT), insbesondere in Form einer transparenten Folie, welche unter Bildung von mindestens zwei sich mindestens teilweise überlappenden ebenen Anzeigebereichen mindestens einmal um einen Winkel von exakt oder im Wesentlichen 180° gebogen ist. OLED-Folien bzw. TFT-Folien emittieren bei entsprechender elektrischer Ansteuerung selbst das zum Anzeigen von Informationen erforderliche Licht. Mittels einer zumindest teiltransparenten OLED-Folie bzw. TFT-Folie können auf einfache und kostengünstige Weise zwei oder mehrere ebene Anzeigebereiche gebildet werden, die bezogen auf die Blickrichtung des Betrachters hintereinander angeordnet und für diesen gleichzeitig sichtbar sind. In den Schutzbereich der Erfindung fallen auch weitere bekannte oder zukünftige Anzeigetechnologien, welche das Ausbilden transparenter Folien erlauben. Eine Biegung um einen Winkel von exakt oder im Wesentlichen 180° kann auch mehrstufig realisiert sein, beispielsweise mit zwei Biegestufen von jeweils etwa 90°.

In einer alternativen Ausführungsform umfasst die Anzeigeeinrichtung mindestens zwei jeweils einen Anzeigebereich bildende ebene Spiegel, die sich exakt oder im Wesentlichen parallel zueinander erstrecken. Selbstverständlich müssen vordere Spiegel halbtransparent ausgebildet sein, um nicht den Blick des Betrachters auf hintere Spiegel zu versperren. Mittels der Spiegel kann das von einem für den Betrachter nicht einsehbaren Bildschirm emittierte Licht in die Blickrichtung des Betrachters reflektiert werden. Derartige Spiegel sind einfach und kostengünstig herzustellen und handzuhaben.

In einer weiteren Ausführungsform erstreckt sich die Betätigungseinheit durch in den Anzeigebereichen vorgesehene und in der Blickrichtung miteinander fluchtende Aussparungen und ist in durch die Anzeigeeinrichtung definierten Betätigungsrichtungen bewegbar ausgebildet. Auf diese Weise wird erreicht, dass das Bediensystem von dem Bediener als integrale Einheit wahrgenommen wird und sich die Betätigungseinheit intuitiv betätigen lässt.

In anderen Ausführungsformen ist die Betätigungseinheit beabstandet zu der Anzeigeeinrichtung angeordnet, insbesondere in ein Lenkrad des Fahrzeugs integriert oder in einem zu dem Lenkrad benachbarten Bereich des Fahrzeugs vorgesehen. Dadurch wird erreicht, dass der Bediener beim Betätigen der Bedieneinrichtung das Lenkrad nicht loslassen muss oder mindestens keine Hand weit von dem Lenkrad entfernen muss. Dies erhöht die Sicherheit des Fahrzeugs beim Betätigen der Bedieneinrichtung.

In einer bevorzugten Ausführungsform umfasst die Betätigungseinheit einen Drehregler, welcher eine sich in der Blickrichtung erstreckende Drehachse definiert und um die Drehachse drehbar und in Richtung der Drehachse verschiebbar ist. Ein derartiger Drehregler erlaubt ein Einstellen von Steuergrößen, wie einer Lautstärke oder einer Zieltemperatur, ebenso einfach und intuitiv wie ein Navigieren zwischen den Anzeigebereichen der Anzeigeeinrichtung.

In einer besonders bevorzugten Ausführungsform ist die Drehachse des Drehreglers um mindestens eine sich quer zu der Drehachse erstreckende Schwenkachse verschwenkbar, insbesondere in einer Links-Rechts-Richtung und/oder in einer Oben-Unten-Richtung. Die Verschwenkbarkeit des Drehreglers ermöglicht ein einfaches und intuitives Navigieren innerhalb eines bestimmten Anzeigebereichs der Anzeigeeinrichtung.

In einer Ausführungsform umfasst die Betätigungseinheit einen Berührungssensor (Touch Pad). Der Berührungssensor kann auf einer dem Bediener zugewandten Stirnfläche der Betätigungseinheit angeordnet sein. Beispielsweise lässt sich durch wiederholtes kurzes Tippen auf den Berührungssensor eine Gerätefunktion besonders einfach aktivieren bzw. deaktivieren. Bei einem längeren Berühren des Berührungssensors können in einem zyklischen Durchlauf mögliche Werte einer bestimmten Steuergröße vorgeschlagen und beim Loslassen des Berührungssensors entsprechend dem aktuellen Vorschlag eingestellt werden.

In einer weiteren Ausführungsform umfasst die Betätigungseinheit ein Mikrofon und ist konfiguriert, ein Betätigen des Bediensystems mittels akustisch erfassbarer Befehle, insbesondere in Form einer Sprachsteuerung zu ermöglichen. Das Mikrofon ist in dem Fahrzeug derart angeordnet und ausgerichtet, dass es akustische Äußerungen eines bestimmten Bedieners oder mehrerer Bediener erfassen kann. Bei dieser Ausgestaltung der Betätigungseinheit ist keine manuelle Aktion seitens eines Bedieners erforderlich. Demnach muss der Fahrer des Fahrzeugs zum Betätigen von Geräten des Fahrzeugs keine Hand vom Lenkrad lösen, wodurch die Unfallgefahr für das Fahrzeug verringert ist.

In noch einer weiteren Ausführungsform umfasst die Betätigungseinheit eine Kamera und ist konfiguriert, ein Betätigen des Bediensystems mittels optisch erfassbarer Befehle, insbesondere in Form einer Gestiksteuerung zu ermöglichen. Die Kamera ist in dem Fahrzeug derart angeordnet und ausgerichtet, dass es Gesten eines bestimmten Bedieners oder mehrerer Bediener erfassen kann. Ein gestisches Bedienen von Gerätefunktionen erfordert kein Verändern der Blickrichtung des Bedieners. Daher kann der Fahrer des Fahrzeugs während des Betätigens des Bediensystems den Blick auf das Verkehrsgeschehen in der Umgebung des Fahrzeugs gerichtet halten.

In einer bevorzugten Ausführungsform sind verschiedene Funktionsgruppen des Fahrzeugs auf verschiedenen Anzeigebereichen der Anzeigeeinrichtung angeordnet. Mit anderen Worten sind die Informationen betreffend die Gerätefunktionen funktional in der dritten Raumdimension geordnet. Eine derartige Ordnung kann von dem Bediener besonders einfach und schnell erlernt werden.

Die Erfindung ist anhand von Ausführungsformen in den Zeichnungen schematisch dargestellt und wird unter Bezugnahme auf die Zeichnungen weiter beschrieben. Es zeigt:
- Figur 1: in einer perspektivischen Explosionsansicht eine schematische Darstellung einer Ausführungsform des erfindungsgemäßen Bediensystems,
- Figur 2: in einer perspektivischen Vorderansicht eine schematische Darstellung einer weiteren Ausführungsform des erfindungsgemäßen Bediensystems,
- Figur 3: in einer perspektivischen Vorderansicht eine schematische Darstellung einer weiteren Ausführungsform des erfindungsgemäßen Bediensystems,
- Figur 4: in einer perspektivischen Vorderansicht eine Darstellung einer weiteren Ausführungsform des erfindungsgemäßen Bediensystems,
- Figur 5: in einer perspektivischen Detailansicht das in Figur 4 dargestellte Bediensystem,
- Figur 6: in einer perspektivischen Vorderansicht eine Darstellung einer weiteren Ausführungsform des erfindungsgemäßen Bediensystems, und
- Figur 7: in einer perspektivischen Vorderansicht eine Darstellung einer weiteren Ausführungsform des erfindungsgemäßen Bediensystems.

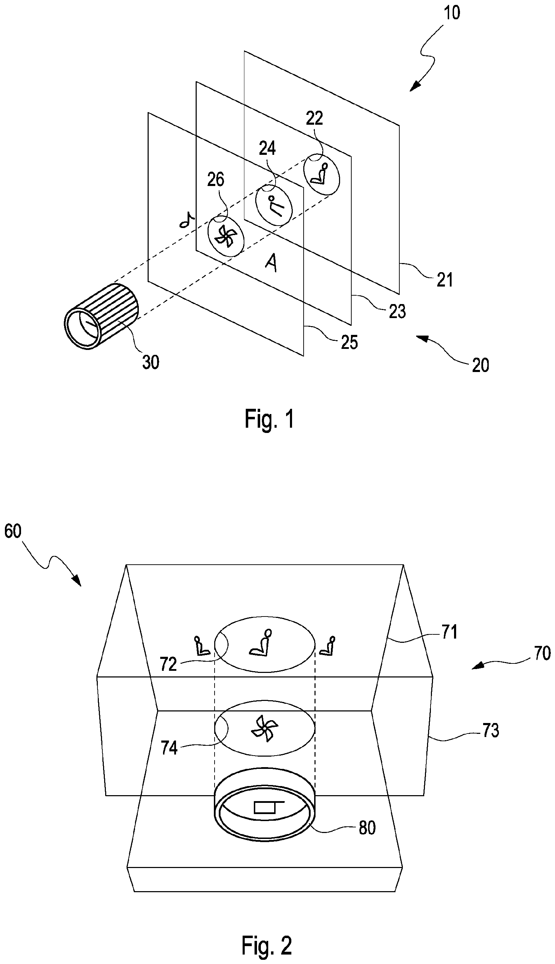

Figur 1 zeigt in einer perspektivischen Explosionsansicht eine schematische Darstellung einer Ausführungsform des erfindungsgemäßen Bediensystems. Das Bediensystem 10 ist zum Bedienen mehrerer Geräte eines nicht dargestellten Fahrzeugs geeignet und weist eine Anzeigeeinrichtung 20 mit drei in einer Blickrichtung eines Bedieners hintereinander angeordneten und sich quer zu der Blickrichtung erstreckenden ebenen Anzeigebereichen 21, 23, 25 auf. Verschiedenen Geräten des Fahrzeugs zugeordnete Funktionsgruppen sind auf verschiedenen Anzeigebereichen 21, 23, 25 der Anzeigeeinrichtung 20 angeordnet.

Die Anzeigebereiche 21, 23, 25 sind als drei ebene Spiegel ausgebildet, die sich parallel zueinander erstrecken. Dabei sind die dem Bediener näheren vorderen Spiegel halbtransparent ausgebildet, um den Blick des Bedieners auf die hinteren Spiegel nicht zu versperren. In den Anzeigebereichen 21, 23, 25 sind jeweils in der Blickrichtung miteinander fluchtende Aussparungen 22, 24, 26 vorgesehen.

Ferner weist das Bediensystem 10 eine Betätigungseinheit 30 auf, die sich durch die Aussparungen 22, 24, 26 erstreckt. Die Betätigungseinheit 30 ist in durch die Anzeigeeinrichtung 20 definierten Betätigungsrichtungen bewegbar und zum Navigieren zwischen den Anzeigebereichen 21, 23, 25 und innerhalb jedes Anzeigebereichs 21, 23, 25 sowie zum Bedienen der Geräte ausgebildet.

Die Betätigungseinheit 30 umfasst einen Drehregler, welcher eine sich in der Blickrichtung erstreckende Drehachse definiert und um die Drehachse gedreht und in Richtung der Drehachse durch die Aussparungen 22, 24, 26 verschoben werden kann. Zudem ist die Drehachse des Drehreglers um zwei sich senkrecht zueinander und zu der Drehachse erstreckende Schwenkachsen in einer Links-Rechts-Richtung und in einer Oben-Unten-Richtung verschwenkbar. Der Drehregler weist mehrere Rastpositionen für bestimmte Drehwinkel auf. Zudem ist der Drehregler ausgebildet, ein Betätigen durch den Fahrer und ein Betätigen durch den Beifahrer zu unterscheiden.

Ferner umfasst die Betätigungseinheit 30 einen Berührungssensor (Touch Pad), welcher auf der dem Bediener zugewandten Stirnfläche des Drehschalters angeordnet ist, ein nicht dargestelltes Mikrofon zum Erfassen akustischer Äußerungen des Bedieners sowie eine nicht dargestellte Kamera zum Erfassen von Gesten des Bedieners.

Während des Betriebs des Bediensystems 10 werden dem Bediener fortlaufend Informationen betreffend Betriebszustände von mit dem Bediensystem verbundenen Geräten des Fahrzeugs auf den Anzeigebereichen 21, 23, 25 der Anzeigeeinrichtung 20 angezeigt. Zum Bedienen der Geräte navigiert der Bediener zwischen den Anzeigebereichen 21, 23, 25, indem der den Drehregler der Betätigungseinheit 30 in den Aussparungen 22, 24, 26 wahlweise vor- und zurückschiebt. Innerhalb eines gewählten Anzeigebereichs 21, 23, 25 kann der Bediener dann durch geeignetes Verschwenken des Drehreglers eine gewünschte Funktion oder eine Steuergröße eines Geräts durch Positionieren einer Markierung zum Einstellen bestimmen. Das Einstellen einer Steuergröße erfolgt durch Drehen des Drehreglers um die Drehachse. Dabei sind den Rastpositionen vorbestimmte Veränderungsschritte der einzustellenden Steuergröße (z.B. 0,5 °C/Rastposition) zugeordnet.

Das Ein- bzw. Ausschalten einer Funktion erfolgt durch Berühren des Berührungssensors, während das Verändern einer Steuergröße durch Verdrehen des Drehreglers erfolgt. Alternativ kann die bestimmte Steuergröße auch durch längeres Berühren des Berührungssensors, wodurch automatisch und zyklisch eine Sequenz aller möglichen Werte der Steuergröße angezeigt wird, und entsprechendes Loslassen des Berührungssensors, wenn der gewünschte Wert der Steuergröße angezeigt wird, eingestellt werden.

Zudem ist es möglich, das Bediensystem 20 über das Mikrofon oder die Kamera sprach- bzw. gestengesteuert zu betätigen.

Figur 2 zeigt in einer perspektivischen Vorderansicht eine schematische Darstellung einer weiteren Ausführungsform des erfindungsgemäßen Bediensystems. Das Bediensystem 60 umfasst eine Anzeigeeinrichtung 70 und eine Betätigungseinheit 80 und unterscheidet sich von dem in Figur 1 dargestellten Bediensystem 20 dadurch, dass die Anzeigeeinrichtung 70 eine transparente OLED-Folie umfasst, welche einmal um 180° gebogen ist und zwei sich überlappende ebene Anzeigebereiche 71, 73 mit darin vorgesehenen Aussparungen 72, 74 definiert.

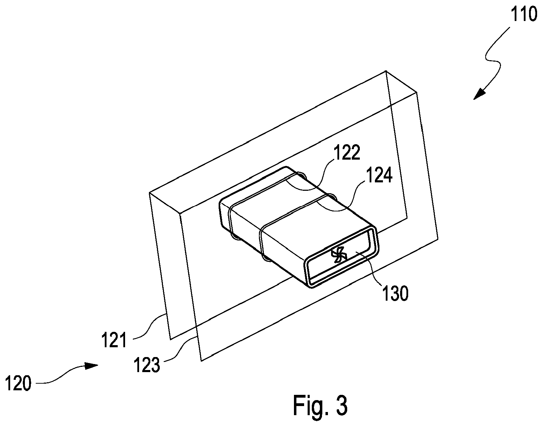

Figur 3 zeigt in einer perspektivischen Vorderansicht eine schematische Darstellung einer weiteren Ausführungsform des erfindungsgemäßen Bediensystems. Das Bediensystem 110 entspricht hinsichtlich seines Grundaufbaus dem in der Figur 2 gezeigten Bediensystem 60 und weist eine Anzeigeeinrichtung 120 mit zwei Anzeigebereichen 121, 123, in denen Aussparungen 122, 124 vorgesehen sind, sowie eine als Drehregler ausgebildete Betätigungseinheit 130 auf. Im Unterschied zu dem Bediensystem 60 ist der Drehregler allerdings nicht rotationssymmetrisch um die Drehachse ausgestaltet, sondern weist einen im Wesentlichen rechteckigen Querschnitt mit abgeflachten Ecken auf. Entsprechend lässt sich der Drehregler nur innerhalb eines kleinen, durch das Spiel in den Aussparungen 122, 124 begrenzten Winkelbereichs verdrehen.

Ein Einstellen einer bestimmten Steuergröße erfolgt bei dieser Ausgestaltung des Drehreglers, für die die Bezeichnung "Toggle" gebräuchlich ist, durch längeres Halten einer Winkelauslenkung, um automatisch eine Sequenz aller möglichen Werte der Steuergröße anzuzeigen, und Loslassen des Drehreglers, sobald ein gewünschter Wert für die Steuergröße angezeigt wird.

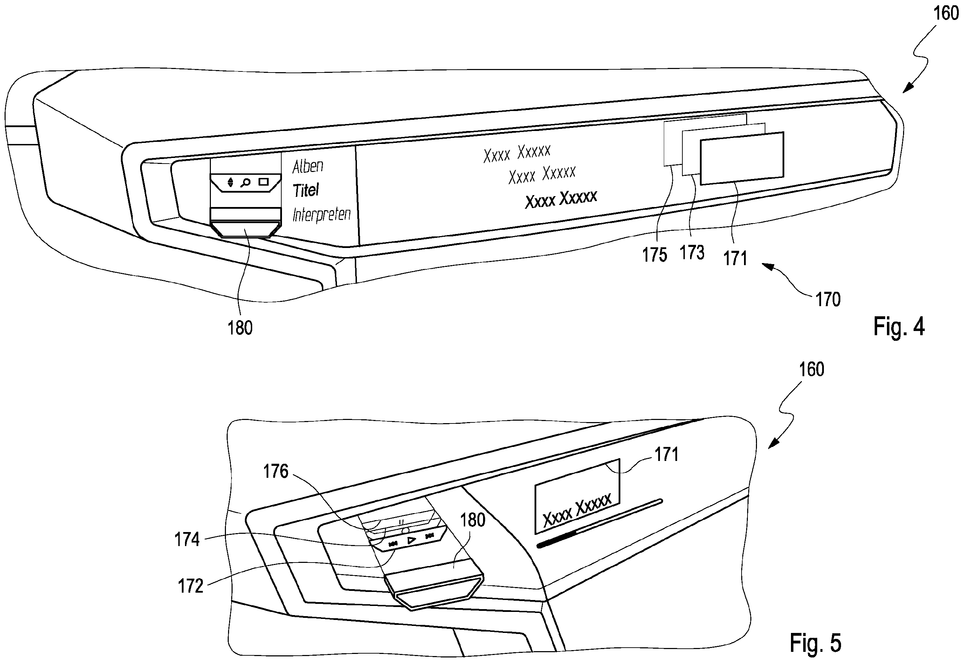

Figur 4 zeigt in einer perspektivischen Vorderansicht eine Darstellung einer weiteren Ausführungsform des erfindungsgemäßen Bediensystems. Das Bediensystem 160 entspricht hinsichtlich seines Grundaufbaus dem in der Figur 1 dargestellten Bediensystem 10 und weist eine Anzeigeeinrichtung 170 mit länglichen Anzeigebereichen 171, 173, 175, in denen seitlich Aussparungen 172, 174, 176 vorgesehen sind, sowie einer Betätigungseinheit 180 mit einem trapezförmigen Querschnitt. Das Bediensystem 160 dient dem Beifahrer als Multimedia-Schnittstelle (Multi Media interface, MMi) eines in dem Fahrzeug verbauten Informations- und Unterhaltungssystems.

Figur 5 zeigt in einer vergrößerten Detailansicht die Betätigungseinheit 180 des in Figur 4 dargestellten Bediensystems 160.

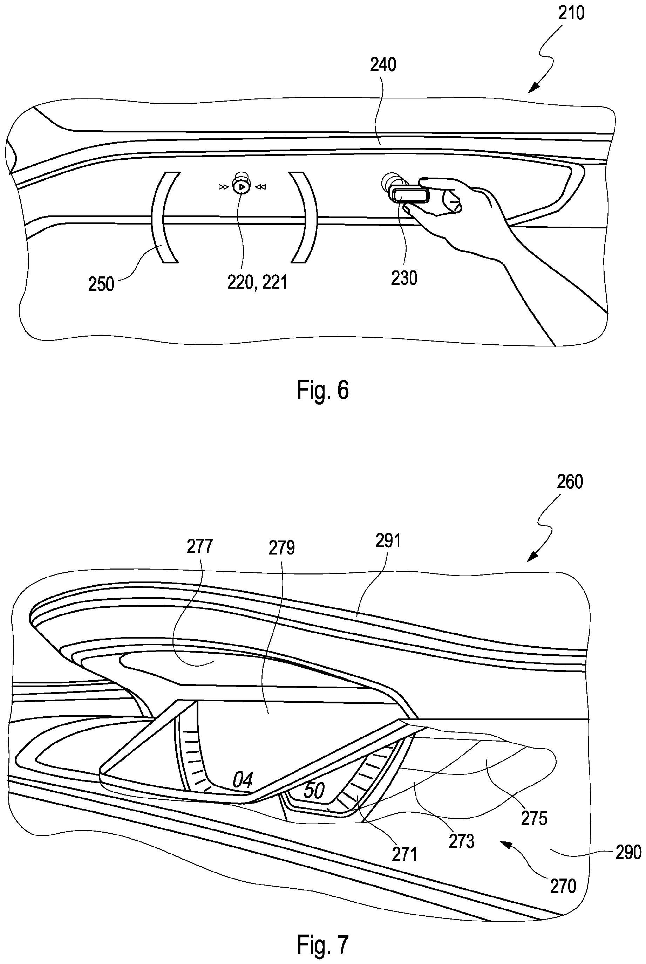

Figur 6 zeigt in einer perspektivischen Vorderansicht eine Darstellung einer weiteren Ausführungsform des erfindungsgemäßen Bediensystems. Das Bediensystem 210 kommt in seinem Grundaufbau dem in den Figuren 4 und 5 gezeigten Bediensystem 160 am nächsten und umfasst eine Anzeigeeinrichtung 220 mit drei Anzeigebereichen, von denen der Übersichtlichkeit halber nur der dem Betrachter nächste Anzeigebereich 221 gezeigt ist, sowie eine Betätigungseinheit 230. Das Bediensystem 210 ist im Blickfeld des Fahrers auf einem Armaturenbrett 240 und hinter einem Lenkrad 250 des Fahrzeugs angeordnet und gewährt dem Fahrer Zugriff auf Informationen und Steuergrößen betreffend beispielsweise den Motor oder die Fahrtroute.

Figur 7 zeigt in einer perspektivischen Vorderansicht eine Darstellung einer weiteren Ausführungsform des erfindungsgemäßen Bediensystems. Das Bediensystem 260 entspricht in seinem Grundaufbau dem in der Figur 1 dargestellten Bediensystem 10. Es umfasst eine Anzeigeeinrichtung 270 mit drei Anzeigebereichen 271, 273, 275. Die Anzeigebereiche 271, 273, 275 sind auf der Oberseite eines Armaturenbretts 290 des Fahrzeugs angeordnet und zur Vermeidung störender Reflexe durch einen von dem Armaturenbrett 290 schräg aufwärts nach hinten vorstehenden Dachabschnitt 291 vor einem Lichteinfall aus der Umgebung des Fahrzeugs geschützt. Mittels der als Spiegel ausgebildeten Anzeigebereiche 271, 273, 275 wird das emittierte Licht eines in dem Dachabschnitt 291 angeordneten ersten Bildschirms 277 und eines in dem Armaturenbrett 290 angeordneten zweiten Bildschirms 279 überlagert und in die Blickrichtung des Betrachters reflektiert. Die in Figur 7 nicht dargestellte mit der Anzeigeeinrichtung 270 kombinierte Betätigungseinheit kann beispielsweise in ein Lenkrad oder eine Tür des Fahrzeugs integriert sein und ein Mikrofon zur Sprachsteuerung und/oder eine Kamera zur Gestiksteuerung umfassen.

Das erfindungsgemäße Bediensystem bietet den Vorteil, das Bedienen der Geräte des Fahrzeugs übersichtlicher zu gestalten. Dies wird erreicht mittels Gruppierens von Gerätefunktionen und Verteilens der gebildeten Funktionsgruppen auf mehrere Anzeigebereiche des Bediensystems. Der Betrachter und Bediener des Bediensystems kann seine Augen auf einen bestimmten Anzeigebereich fokussieren und blendet infolgedessen weitere außerhalb des Schärfebereichs seiner Augen liegende Anzeigebereiche ohne Weiteres aus. Die Verteilung der Funktionsgruppen auf die Anzeigebereiche sowie die auf einem Anzeigebereich jeweils dargestellten Funktionen oder Steuergrößen lassen sich ähnlich wie "Shortcuts" auf einer Tastatur rasch erlernen, und nach dem Erlernen der Verteilung kann das Bediensystem im Wesentlichen blind betätigt werden. Eine weiterer Vorteil des erfindungsgemäßen Bediensystems ist darin zu sehen, dass das Betätigen der Betätigungseinheit korrespondierend zu ergonomischen Konzepten wie "mehr", "weniger", "links", "rechts" und dergleichen erfolgen kann, was mit einer intuitiven Handhabung des Bediensystems einhergeht. Nicht zuletzt besticht das erfindungsgemäße Bediensystem auch durch ein völlig neues und faszinierendes Interaktionserleben des Bedieners, wodurch sich die Wertschätzung des Bedieners für das Fahrzeug und die Bindung des Bedieners an das Fahrzeug verstärken.

### BEZUGSZEICHENLISTE:

- 10: Bediensystem
- 20: Anzeigeeinrichtung
- 21: Anzeigebereich
- 22: Aussparung
- 23: Anzeigebereich
- 24: Aussparung
- 25: Anzeigebereich
- 26: Aussparung
- 30: Betätigungseinheit
- 60: Bediensystem
- 70: Anzeigeeinrichtung
- 71: Anzeigebereich
- 72: Aussparung
- 73: Anzeigebereich
- 74: Aussparung
- 80: Betätigungseinheit
- 110: Bediensystem
- 120: Anzeigeeinrichtung
- 121: Anzeigebereich
- 122: Aussparung
- 123: Anzeigebereich
- 124: Aussparung
- 130: Betätigungseinheit
- 160: Bediensystem
- 170: Anzeigeeinrichtung
- 171: Anzeigebereich
- 172: Aussparung
- 173: Anzeigebereich
- 174: Aussparung
- 175: Anzeigebereich
- 176: Aussparung
- 180: Betätigungseinheit
- 210: Bediensystem
- 220: Anzeigeeinrichtung
- 221: Anzeigebereich
- 230: Betätigungseinheit
- 240: Armaturenbrett
- 250: Lenkrad
- 260: Bediensystem
- 270: Anzeigeeinrichtung
- 271: Anzeigebereich
- 273: Anzeigebereich
- 275: Anzeigebereich
- 277: Bildschirm
- 279: Bildschirm
- 290: Armaturenbrett
- 291: Dachabschnitt

## Patentansprüche

1. Bediensystem (10, 60, 110, 160, 210, 260) für mehrere Geräte eines Fahrzeugs, welches Bediensystem eine Anzeigeeinrichtung (20, 70, 120, 170, 220, 270) aufweist und bei dem eine Betätigungseinheit (30, 80, 130, 180, 230) vorgesehen ist, die zum Bedienen der Geräte ausgebildet ist, wobei die Anzeigeeinrichtung (20, 70, 120, 170, 220, 270) mindestens zwei in einer Blickrichtung eines Bedieners hintereinander angeordnete und sich quer zu der Blickrichtung erstreckende ebene Anzeigebereiche (21, 23, 25, 71, 73, 121, 123, 171, 173, 175, 221, 271, 273, 275) aufweist und die Betätigungseinheit (30, 80, 130, 180, 230) zum Navigieren zwischen den Anzeigebereichen (21, 23, 25, 71, 73, 121, 123, 171, 173, 175, 221, 271, 273, 275) und innerhalb jedes Anzeigebereichs (21, 23, 25, 71, 73, 121, 123, 171, 173, 175, 221, 271, 273, 275) ausgebildet ist.

2. Bediensystem nach Anspruch 1, bei dem die Anzeigeeinrichtung (70) mehrere organische Leuchtdioden umfasst, insbesondere in Form einer transparenten Folie, welche unter Bildung von mindestens zwei sich mindestens teilweise überlappenden ebenen Anzeigebereichen (71, 73) mindestens einmal um einen Winkel von exakt oder im Wesentlichen 180° gebogen ist.

3. Bediensystem nach Anspruch 2, bei dem die Anzeigeeinrichtung (20, 120, 170, 220, 270) mindestens zwei jeweils einen Anzeigebereich (21, 23, 25, 121, 123, 171, 173, 175, 221, 271, 273, 275) bildende ebene Spiegel umfasst, die sich exakt oder im Wesentlichen parallel zueinander erstrecken.

4. Bediensystem nach einem der Ansprüche 1 bis 3, bei dem sich die Betätigungseinheit (30, 80, 130, 180, 230) durch in den Anzeigebereichen (21, 23, 25, 121, 123, 171, 173, 175, 221) vorgesehene und in der Blickrichtung miteinander fluchtende Aussparungen (22, 24, 26, 122, 124, 172, 174, 175, 222) erstreckt und in durch die Anzeigeeinrichtung (20, 120, 170, 220) definierten Betätigungsrichtungen bewegbar ausgebildet ist.

5. Bediensystem nach Anspruch 4, bei dem die Betätigungseinheit (30) einen Drehregler umfasst, welcher eine sich in der Blickrichtung erstreckende Drehachse definiert und um die Drehachse drehbar und in Richtung der Drehachse verschiebbar ist.

6. Bediensystem nach Anspruch 5, bei dem die Drehachse des Drehreglers um mindestens eine sich quer, insbesondere senkrecht zu der Drehachse erstreckende Schwenkachse verschwenkbar ist, insbesondere in einer Links-Rechts-Richtung und/oder in einer Oben-Unten-Richtung.

7. Bediensystem nach einem der Ansprüche 1 bis 6, bei dem die Betätigungseinheit (30, 80, 130, 180, 230) einen Berührungssensor umfasst.

8. Bediensystem nach einem der Ansprüche 1 bis 7, bei dem die Betätigungseinheit (30, 80, 130, 180, 230) ein Mikrofon umfasst und konfiguriert ist, ein Betätigen des Bediensystems (10, 60, 110, 160, 210, 260) mittels akustisch erfassbarer Befehle, insbesondere in Form einer Sprachsteuerung zu ermöglichen.

9. Bediensystem nach einem der Ansprüche 1 bis 8, bei dem die Betätigungseinheit (30, 80, 130, 180, 230) eine Kamera umfasst und konfiguriert ist, ein Betätigen des Bediensystems (10, 60, 110, 160, 210, 260) mittels optisch erfassbarer Befehle, insbesondere in Form einer Gestiksteuerung zu ermöglichen.

10. Bediensystem nach einem der Ansprüche 1 bis 9, bei dem verschiedene Funktionsgruppen des Fahrzeugs auf verschiedenen Anzeigebereichen (21, 23, 25, 71, 73, 121, 123, 171, 173, 175, 221, 271, 273, 275) der Anzeigeeinrichtung (20, 70, 120, 170, 220, 270) angeordnet sind.

## Claims

1. Operating system (10, 60, 110, 160, 210, 260) for a plurality of devices of a vehicle, which operating system has a display apparatus (20, 70, 120, 170, 220, 270) and in which an actuator unit (30, 80, 130, 180, 230) is provided, wherein the display apparatus (20, 70, 120, 170, 220, 270) has at least two planar display regions (21, 23, 25, 71, 73, 121, 123, 171, 173, 175, 221, 271, 273, 275) arranged one behind the other in a viewing direction of an operator and which extend transversely to the viewing direction, and the actuator unit (30, 80, 130, 180, 230) is configured to navigate between the display regions (21, 23, 25, 71, 73, 121, 123, 171, 173, 175, 221, 271, 273, 275) and within each of the display regions (21, 23, 25, 71, 73, 121, 123, 171, 173, 175, 221, 271, 273, 275).

2. Operating system according to claim 1, in which the display apparatus (70) comprises a plurality of organic light-emitting diodes, in particular in the form of a transparent foil, which with the formation of at least two at least partially overlapping planar display regions (71, 73) is bent at least once through an angle of exactly or substantially 180°.

3. Operating system according to claim 2, in which the display apparatus (20, 70, 120, 170, 220, 270) comprises at least two planar mirrors, each of which form a display region (21, 23, 25, 121, 123, 171, 173, 175, 221, 271, 273, 275) and which extend exactly or substantially parallel to each other.

4. Operating system according to any one of claims 1 to 3, in which the actuator unit (30, 80, 130, 180, 230) extends through openings (22, 24, 26, 122, 124, 172, 174, 175, 222), which are provided in the display regions (21, 23, 25, 121, 123, 171, 173, 175, 221) and align with each other in the viewing direction, and is configured to be movable in operating directions defined by the display apparatus (20, 120, 170, 220).

5. Operating system according to claim 4, in which the actuator unit (30) comprises a rotary controller which defines a rotation axis extending in the viewing direction and is rotatable about the rotation axis and is displaceable in the direction of the rotation axis.

6. Operating system according to claim 5, in which the rotation axis of the rotary controller is pivotable about at least one pivot axis extending transversely, in particular perpendicularly, to the rotation axis, in particular in a left-right direction and/or an up-down direction.

7. Operating system according to any one of claims 1 to 6, in which the actuator unit (30, 80, 130, 180, 230) comprises a touch sensor.

8. Operating system according to any one of claims 1 to 7, in which the actuator unit (30, 80, 130, 180, 230) comprises a microphone and is configured to enable actuation of the operating system (10, 60, 110, 160, 210, 260) by means of acoustically detectable commands, in particular in the form of voice control.

9. Operating system according to any one of claims 1 to 8, in which the actuator unit (30, 80, 130, 180, 230) comprises a camera and is configured to enable actuation of the operating system (10, 60, 110, 160, 210, 260) by means of optically detectable commands, in particular in the form of gesture control.

10. Operating system according to any one of claims 1 to 9, in which different function groups of the vehicle are arranged on different planar display regions (21, 23, 25, 71, 73, 121, 123, 171, 173, 175, 221, 271, 273, 275) of the display apparatus (20, 70, 120, 170, 220, 270).

## Revendications

1. Système de commande (10, 60, 110, 160, 210, 260) pour plusieurs appareils d'un véhicule, lequel système de commande présente un dispositif d'affichage (20, 70, 120, 170, 220, 270) et pour lequel une unité d'actionnement (30, 80, 130, 180, 230) est prévue, laquelle est réalisée pour la commande des appareils, dans lequel le dispositif d'affichage (20, 70, 120, 170, 220, 270) présente au moins deux zones d'affichage (21, 23, 25, 71, 73, 121, 123, 171, 173, 175, 221, 271, 273, 275) planes agencées dans un sens de regard d'un utilisateur l'une derrière l'autre et s'étendant transversalement au sens du regard et l'unité d'actionnement (30, 80, 130, 180, 230) est réalisée pour la navigation entre les zones d'affichage (21, 23, 25, 71, 73, 121, 123, 171, 173, 175, 221, 271, 273, 275) et à l'intérieur de chaque zone d'affichage (21, 23, 25, 71, 73, 121, 123, 171, 173, 175, 221, 271, 273, 275).

2. Système de commande selon la revendication 1, pour lequel le dispositif d'affichage (70) comprend plusieurs diodes électroluminescentes organiques, en particulier sous la forme d'un film transparent qui est plié en formant au moins deux zones d'affichage (71, 73) planes se recouvrant au moins partiellement au moins une fois d'un angle d'exactement ou de sensiblement 180°.

3. Système de commande selon la revendication 2, pour lequel le dispositif d'affichage (20, 120, 170, 220, 270) comprend au moins deux miroirs plans formant respectivement une zone d'affichage (21, 23, 25, 121, 123, 171, 173, 175, 221, 271, 273, 275) qui s'étendent exactement ou sensiblement parallèlement l'un à l'autre.

4. Système de commande selon l'une quelconque des revendications 1 à 3, pour lequel l'unité d'actionnement (30, 80, 130, 180, 230) s'étend à travers des évidements (22, 24, 26, 122, 124, 172, 174, 175, 222) prévus dans les zones d'affichage (21, 23, 25, 121, 123, 171, 173, 175, 221) et s'alignant les uns sur les autres dans le sens du regard et est réalisée de manière mobile dans des sens d'actionnement définis par le dispositif d'affichage (20, 120, 170, 220).

5. Système de commande selon la revendication 4, pour lequel l'unité d'actionnement (30) comprend un régulateur rotatif qui définit un axe de rotation s'étendant dans le sens du regard et est rotatif autour de l'axe de rotation et est mobile en direction de l'axe de rotation.

6. Système de commande selon la revendication 5, pour lequel l'axe de rotation du régulateur rotatif est pivotant autour d'au moins un axe de pivotement s'étendant transversalement, en particulier perpendiculairement à l'axe de rotation, en particulier dans un sens gauche-droite et/ou dans un sens haut-bas.

7. Système de commande selon l'une quelconque des revendications 1 à 6, pour lequel l'unité d'actionnement (30, 80, 130, 180, 230) comprend un capteur de contact.

8. Système de commande selon l'une quelconque des revendications 1 à 7, pour lequel l'unité d'actionnement (30, 80, 130, 180, 230) comprend un microphone et est configurée afin de permettre un actionnement du système de commande (10, 60, 110, 160, 210, 260) au moyen d'ordres détectables de manière acoustique, en particulier sous la forme d'une commande vocale.

9. Système de commande selon l'une quelconque des revendications 1 à 8, pour lequel l'unité d'actionnement (30, 80, 130, 180, 230) comprend une caméra et est configurée afin de permettre un actionnement du système de commande (10, 60, 110, 160, 210, 260) au moyen d'ordres détectables de manière optique, en particulier sous la forme d'une commande gestuelle.

10. Système de commande selon l'une quelconque des revendications 1 à 9, pour lequel différents groupes fonctionnels du véhicule sont agencés sur différentes zones d'affichage (21, 23, 25, 71, 73, 121, 123, 171, 173, 175, 221, 271, 273, 275) du dispositif d'affichage (20, 70, 120, 170, 220, 270).
